# EUROPEAN PATENT APPLICATION

(11) **EP 2 596 932 A2**
(43) Date of publication of application: **29.05.2013**
(21) Application number: 12002353.6
(22) Date of filing: 30.03.2012
(51) Int. Cl.: B29B 17/02, C08J 11/18, D06F 43/08

(54) **Equipment for recycling nylon contained in fabrics by extraction of elastane**

(30) Priority: 23.11.2011 BR PI1104721
(71) Applicant: Heilberg, Ronaldo, Daniel, 01455-010 Sao Paulo SP (BR)
(72) Inventor: Heilberg, Ronaldo, Daniel, 01455-010 Sao Paulo SP (BR)
(74) Representative: Ferreira Magno, Fernando Antonio

(57) **Abstract**

**"EQUIPMENT FOR RECYCLING NYLON CONTAINED IN FABRICS BY EXTRACTION OF SILICONE"**. Patent of invention belonging to the field of raw material recycling equipment, comprised of work tanks (1) (distilled solvent), shell of the material holder basket (2), material holder basket (3), drum support and transmission (4), solvent circulation pump (5), solvent heater (6), air insufflation channel (7), post-drying cooling system (8), holding tank for solvent to be distilled (9), vacuum group (10), system de cooling para vacuum group (11), distillers (12), condensers for the distillers (13), condensate recovery tanks (14), electrical junction box for cleaning / drying module (15), electrical junction box for distillation module (16), solvent leak tank (17), Nitrogen generator (18), Nitrogen storage tank (19), meter and controller of Nitrogen and Oxygen contained in the system (20).

## Description

The current patent descriptive report of invention of an unique equipment for recycling the nylon existing in elastic fabrics containing elastane which is separated by means of a dissolution process through the solvent DMF (Dimethylformamide).

Notably, it is a piece of equipment with process used for recovering the nylon to its pure state without changing the Polyamide molecular structure, to be used as pure nylon and/or engineering plastic receiving addition of additives such as glass fiber, talcum and/or disformant required in the subsequent process.

This equipment of innovative design and provided with important technological and functional improvements, according to the most modern engineering and chemistry designs, in accordance with the safety procedure specifications required, coating them with special characteristics not existing in the recycling market and provided with the essential requirements of novelty and included inventive activity of preservation of the environment, resulting in a number of actual and extraordinary technical, practical and economic advantages.

Nylon is a generic name for the family of polyamides, being that Nylon 6,6 was synthesized by the chemist called Wallace Hume Carothers in 1935 in the United States and Nylon 6 shortly thereafter by Paul Schlack in Germany. It was the first synthetic textile fiber produced. Several textile products are manufactured from these threads, such as Velcro, feminine socks, underwear, one-piece bathing suits, bikinis, Bermuda shorts, shorts and other sports clothes with performance characteristics.

Another use of nylon, also known as engineering plastic on account of the resistance to wear, traction, and flexibility, always depending on the need of use, being able to be used with additives such as glass fiber for technical parts the entire fishing industry, automotive industry, electro-electronics, gears, rollers, moving parts among various other uses. Nylon is also used considerably in noble functions for performing sutures in wounds, since it is a material which is inert to the organism and prevents no inflammatory reaction as other suture threads (e.g.: vicryl, cat-gut, silk, cotton).

The thread from nylon is similar to the spider webs and this is due to a certain chemical similarity between what is nylon and proteins. The polymers which are generally called nylon are a result of the dicarboxilic acids alternately with diamines, while the proteins are amino acid polymers.

Nylon can take up to 400 years to degrade, which generates a great environmental liability. This process allows the reutilization of the material, reducing the impacts to the environment and improving the productive chain.

Nylon is one of the most common artificial fibers, being obtained by means of combinations of diamines with dicarboxilic acids.

Manufacturing process:
Nylon 6.6: are produced from two chloride monomers of adipoliantes with hexamethylene diamide.
Nylon 6: are produced from a type of monomer called Caprolactam.

Taking into consideration the long time degradation, we understand the urgency of developing closed and safe process to recover this noble raw matter, adding a value to a worthless waste and which can bring so such harm to the environment if it is not disposed of and/or recycled in a correct manner with a tested safety standard.

Therefore, the main objectives of the current patent and/ or technological innovation are:
a) Provide the industry with a recycling process or industrial reverse logistic, tested and functional in closed circuit, safe and clean for the environment and operators;
b) To benefit the environment by eliminating a harmful element and of difficult degradation, placing even the marine at risk in some cases;
c) To generate value and reuse of Nylon in a noble and differentiated manner from a waste this would be disposed of with potential hazards to the environment.

Note: the numbers 6 and 6.6, referent to nylon, refer to the number of carbons of each of their constituents.

### GUIDE FOR THE REVERSE LOGISTICS INDUSTRIAL PROCESS USED BY THE EQUIPMENT OBJECT OF THE CURRENT PATENT

In a summarized manner, a state of purity is sought by means of an industrial process with using of solvent (DMF) such that it can take the waste to be reused in a manner as it was chemically designed and generated, and to do that, it is necessary to select the waste, separating the fabrics which contain fibers which are foreign to the process, such as cotton, polypropylene, polyesters by means of manual processes and/or measuring equipment. Once separated from the foreign elements, the nylons 6 must be separated from the 6,6 by evaluating the melting points, which have diverse characteristics for final use both at textile and Engineering Plastic use.

The waste or material to be processed is already selected manually will be divided into batches of Nylon 6 and/or 6.6 always depending on the loading capacity of the machine's material holder. Once the batches of materials are formed, they are loaded onto the machine's material holder basket, the process circuit being closed hermetically.

Next, the hermetic circuit is monitored so as to obtain a work environment free of Oxygen, by introducing Nitrogen at a purity level above 95% on an autonomous and monitored manner during the entire process to ensure that the level of Oxygen never exceeds 8%.

From this point, the solvent Dimethylformamide (DMF) contained in one of the three reservoirs of the equipment is used for this process, and heated until 90ºC by the machine and introduced in the work circuit flooding the rotating material holder basket in a proportion of 10/15 parts of solvent for each 1 kg of waste in a process which can last up to one hour, always depending on the percentage of elastane and the mesh density of the fabric in process in our equipment.

The heated solvent penetrates the waste fibers and dissolves the elastane in a process generated by the movement and rotation of the material holder creating the conditions for obtaining the nylon free of elastane. This process of "washing" the material though the solvent can take place in one or two phases, depending on the state of purity required, and to ensure that all the elastane contained in the fiber is removed. Between the two processes, the machine is always drained from all the solvent goes to the specific tanks to be distilled afterwards.

Next, in a fast centrifugation process, at 500 RPM, all the solvent still present in the waste is removed, which at this point must already be comprised of Nylon pure and free of all the elastane.

Once the centrifugation process is ended, the nylon must still go through a drying process by introducing hot air which circulates through the material being moved inside the rotating material holder basket.

In parallel with the drying the esteamated solvent goes through a condensation process and is accumulated in a tank to be distilled afterwards.

In parallel and during the elastane elimination process in the elastane washing and removal equipment, through the solvent, in a second module called the solvents filtering, distillation and decantation takes place.

In this Distillation module the separation of all the impurities generated by the process takes place and for all the elastane contained in the fabric to be separated form the fabric by decantation and deposited in the settling filter so that it can be removed in pasty form

Next, this paste goes to another independent distillation and pressing process so that all the solvent is recovered and the elastane is directed to a new use.

Once the solvent is distilled and free of elastane and ready for a new process, it is deposited in one of the three clean solvent tanks to be used again in the next cycle of our equipment.

The equipment counts with three tanks to allow always having two tanks with clean solvent and a third one, ready to receive the solvent in process which has just been used to be distilled (the description of the process flow is the object of another patent and the illustration of the equipment to be used is attached and can be evaluated in a more detailed manner).

In sequence, the material generated in the equipment object of the current patent is processed in equipment specific to be compacted so as to facilitate and increase the speed of the extrusion process.

Once compacted, the material is processed hot in extruders (with 1 or 2 bolts) specific for this process, receiving the addition of additives determined by the end use to which the grains, named Chips, Pellets or Flakes, are intended.

The additives are placed according to the need of the end user of the grains to aid is specific performances, such as strength, flexibility, traction, and aid in de-molding.

As soon as the grains are processed by the extruder, they are cooled and dried and then packed hermetically to moisture absorption by the highly hygroscopic nylon.

This material which can be pure and/or with additives cab be reused by the Automotive, Textile or Electro-electronic Industry, Decoration, Equipment for Moving or for Fishing, and, in all, for a huge range of functions and objectives.

So, the Nylon returns to the origin industrial process from the waste with huge economies for the industry, emphasizing that in this manner it would not be necessary to process the Petroleum, and would generate riches from the waste, the environment benefiting from the removal of long duration contamination waste, in addition to generating jobs for the transformation industry.

In conclusion, the equipment object of the current patent, within the reverse logistics view, fulfills all the expectations and requirements of innovation and/or invention, generating richness, benefit to the environment, generating jobs and implements an unique and innovating process, not used previously by the industry.

Thus, the purpose of the current patent is to transform fabrics of nylon with elastane into pure nylon available to be reused in grains as engineering plastic.

The equipment is a machine usually used for treating and dry washing clothes using a solvent known as Perc.

In this sense, the equipment is composed of the following items and details:
A) To work in a closed circuit, free of Oxygen so as to enable the use of Solvents such as Dimethylformamide, K4. Dowclean and others with a flammability point of 58ºC;
B) To work with solvents at a temperature above the solvent's flammability level, i.e., 90ºC;
C) To change the machine's structure to work in a bath ratio which may reach 1 kg de product for 20 It./solvent when the current machines work in 1 kg / 4 It. solvent in spray and not in Immersion;
D) To work with the Product in immersion so as to make the vehicle "solvent" being able to stay in direct contact and open the fibers to remove the elastane, taking it to the distiller;
D) To triple the distilling capacity per volume of resultant silicone in the bath, this can reach 3% of the solvent volume;
E) Need of working with one or more special distillers in a high capacity vacuum so as to enable reducing the solvent boiling, which in the ambient is 170ºC and in vacuum evaporates at 100ºC. To resize the Vacuum Distillers so as to enable solvent purification on the same period for the operation cycle and unload the resultant elastane through the bottom of the distiller in a manual or automatic manner;
F) Additional solvent holding and moving tanks at 90ºC to avoid solvent precipitation;
G) Increase the tank capacities as a function of the increase in the bath ratio;
F) Use O-Rings, mechanical seals, retainers and gaskets in Teflon and other materials which resist the solvent, when the usual is to use Viton, which does not withstand this process;
H) High capacity Nitrogen Generator with storage tank of 1.5 m3 and controller for monitoring Nitrogen purity around 98% and concentration of Oxygen in the process less than 8%;
I) Heating system to enable drying and evaporation of solvent and air cooling for condensation of solvent, which circulates internally in the circuit through Schillers with Freon and recovery of the evaporated solvent

The equipment proposed herein is not used for such a purpose, and in the present day and the waste is used in a secondary manner or deposited in garbage dumps , in such a manner that the current equipment is going to generate a reverse logistics process leading the Nylon to be used in a pure form in the industrial area, avoiding the production process originated in the petroleum chain, to create jobs, to relive the sanitary landfills, and to generate richness from a product which would be discard with no commercial value.

This equipment is unique and the process is not being used in the present day in any continent, according to our research in the Americas, Europe and Asia.

There is no evidence in our research that any type of patent has been requested for similar processes.

So, the advantages of the current equipment in relation to what exists today are:
A) Generation of richness in a product which would go a landfill and/or secondary use;
B) Generation of jobs by the social inclusion of a non-existent, clean and dignified process;
C) To eliminate the disposal of a product in landfills, transforming it into a noble raw material for reuse;
D) To avoid the need of using of the Chemical and petroleum chain reducing costs and contaminations;

Eventually, there can be constructive variations for the equipment, which can be rotating and/or static, to enable the process, but the relevant principles remain, i.e.:
a) Process in a closed circuit and with Nitrogen and Oxygen controlled;
b) Introduction of Nitrogen to ensure the neutrality and safety of the process with control of Oxygen in the process;
c) Heating of the Solvent;
d) Recovery of the Solvent by means of vacuum Distillation.

### Basically, the machine is composed of four modules:

1) A module with closed circuit of washing, extraction, drying of the nylon product and condensation of the solvent used in the circuit at 90ºC;
2) A high capacity module for generating and inserting Nitrogen in the circuit and a purity around 98%, quality control of the Nitrogen and monitoring the volume of residual Oxygen never above 8%;
3) A high capacity module for distillation of the o solvent coming from the process, to be used in the next cycle, eliminating the elastane which will be used in another process;
4) A module containing the clean solvent tanks to be used in the new cycle, the contaminated solvent to be processed by the distiller, the tank containing 1500 It / Nitrogen;
5) In feed of steam, compressed air and electric power to power the Nitrogen generator, distiller, heat exchange, as well as motors and controllers.

To complement the current description, so as to obtain a better understanding of the characteristics of the current patent, and in accordance with a preferential practical performance of the same, accompanies the description, attached, a set of drawings, where, in an exemplified manner, although not limitative, represents as follows:

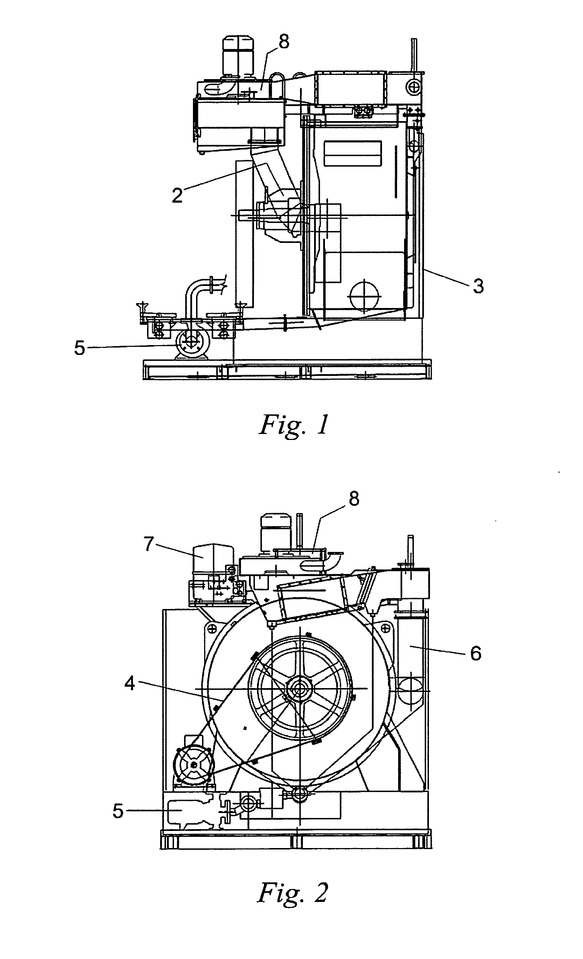

Figure 1 represents the lateral view of the washing module of the equipment for recycling nylon, object of the current patent;
Figure 2 represents the rear view of the washing module of the equipment for recycling nylon, object of the current patent;

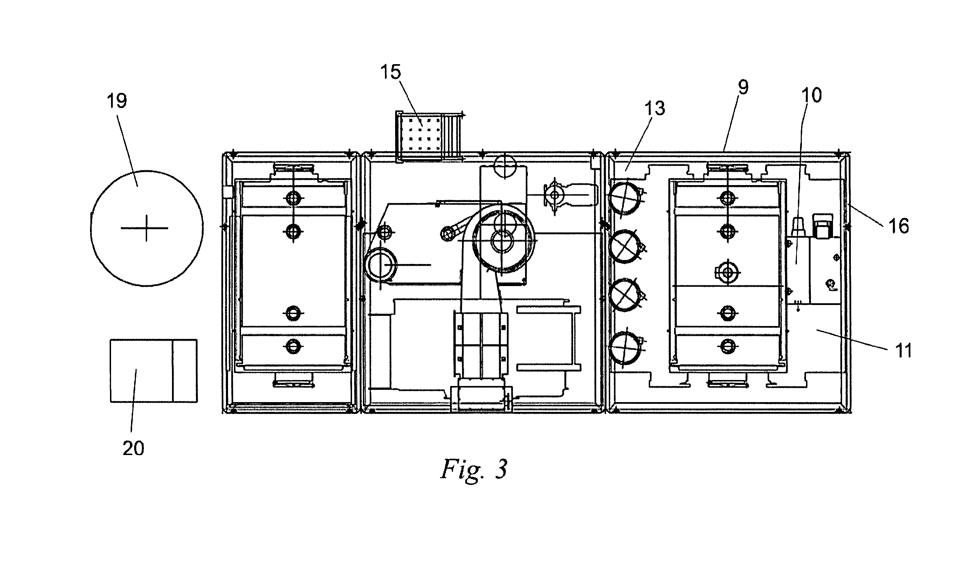

Figure 3 represents the plant view of the equipment for recycling nylon, object of the current patent;

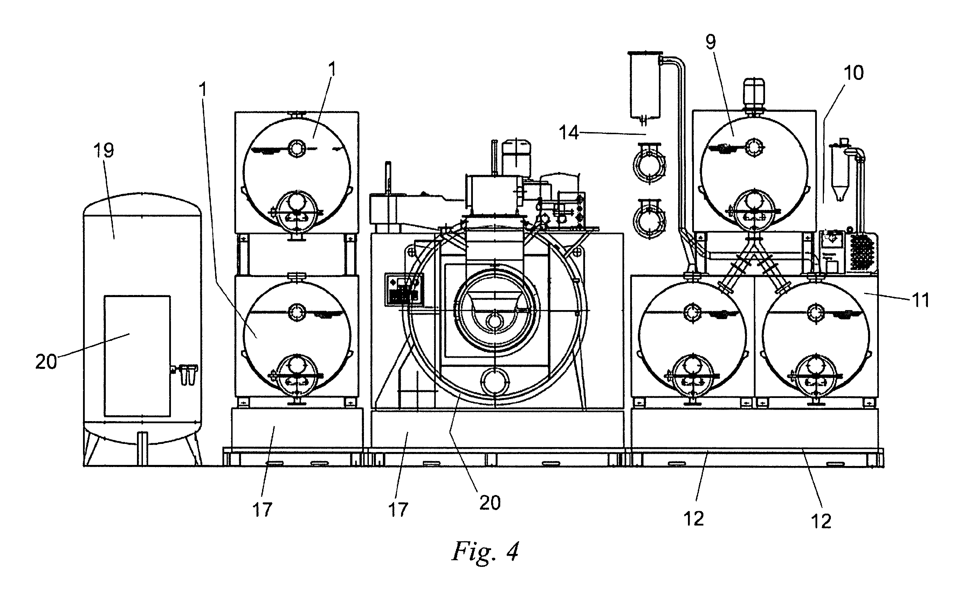

Figure 4 represents the front view of the equipment for recycling nylon, object of the current patent.

In accordance with the above mentioned figures, the equipment for recycling nylon contained in fabrics by the extraction of silicone object of the current patent is comprised of work tanks (1) of cylindrical shape placed in a horizontal manner one over the other, each containing, respectively, solvent for extracting the elastane and solvent for final leaning of the elastane, equipped with removable front cap, two removable maintenance openings, in the front and rear, provided with dual chamber for heating by steam through a coil or indirect steam, thermal insulation, inspection glasses, solvent temperature level controls.

The support structure (2) of the material holder basket is equipped with the rear part removable for placing the basket, connection sleeve so as to enable the passage of air without increasing the amount solvent in circulation, standard sleeve system for drying air input, central discharge system of solvent, basket viewing system through a glass, thermal insulation, infeed port with air insufflation system and support frame.

The rotating material holder (3) is comprised of perforated material with reinforcement tabs, equipped with a cloak with holes, perforated sectors which will be covered with a hole filter net, attached below the reinforcements, with flexible guards to prevent the exit of pieces of fabric out of the material holder basket for the solvent flow, pinned transmission axle so as to avoid any movement.

The support and transmission system (4) is comprised of a system with rollers box with transmission by belts, ball bearings, mechanical seals and Teflon seals and special materials to prevent DMF attack, constant automatic lubrication, notched pulleys and motor with speed controlled by frequency variator (Inverter).

The solvent pumps (5) are comprised by circulation pump for transferring solvent equipped with special pneumatic valves for solvents, pre-filters in parallel as well as manual valves for changing the solvent flow.

The solvent heating (6) is comprised of a (indirect) steam heat exchange within the circuit with the circulation pump prearranged to maintain the temperature ideal during the entire process, as well as being equipped with temperature control, calculated for an increase of temperature adequate to the whole amount of solvent in the circuit.

The air insufflation system (7) is comprised of Schillers with coils heating and cooling the air during the process, equipped with a high air suction to avoid increasing the volume of solvent in the circuit, fans with inverter driven motor, metal air filter, Schiller system with Freon for cooling by means of condensation coils (dual expansion valves), as well as for pre-heating the air heating coils and temperature control systems.

The Cooling system for condensation (8) comprises a Freon refrigerating system for fueling the coils, being equipped with Maneurop compressor, acoustic and thermal insulation, water condenser, Aeroquip in all the coils, accessory components, i.e.: valves, pressure gauges, pressure switches, etc.

The holding tank (9) is circular and it is positioned in horizontal manner by two distillers to receive the solvent to be distilled, it is equipped with a fully removable front, two maintenance openings (front and rear), dual chamber for indirect steam heating, thermal insulation, blade type agitator, inspection with view glass, level and temperature controls.

The vacuum group (10) has a system to generate the steam in distillation up to 50 mbar, being equipped with blade type steam pumps, two Freon condensers for pre-refrigeration of air, impurities filter, Freon condenser for air discharge.

The cooling system for vacuum group (11) has Freon refrigeration for fueling the vacuum group condensers, being equipped with Maneurop compressors, acoustic and thermal insulation, water condenser, Aeroquip in all the condensers, fitting components, i.e.: valves, pressure gages, pressure switches, etc.

The distillers (12) are circular and are positioned in horizontal manner side by side to separate the solvent from the silicone removed, equipped with a fully removable front, two maintenance openings (front and rear), dual chamber for indirect steam heating, thermal insulation, inspection with view glass, level and temperature controls.

The Distiller condensers (13) have solvent vapor coolers originating from the distillers to have them again in the liquid state, and are equipped with water coil, thermostatic valve for saving water, temperature controls.

The condensate recovery tanks (14) have vertical storage containers for solvent condensate originating form the vacuum distillation and destined to the tanks, being equipped with sight glass inspection, level control.

The electrical junction box - cleaning / drying module (15) contains all the electric components for performance installed in the assembly plate and with all the cables in the respective channels, being assembled in a vertical manner, with electro-mechanical components for control / protection, the process control being the responsibility of the touch screen electronic programmer with the possibility of different automatic cycles.

The electrical junction box - distillation module (16) contains all the electric components for performance installed in the assembly plate and with all the cables in the respective channels, being assembled in a vertical manner, with electro-mechanical components for control / protection, the process control being the responsibility of the PLC.

The solvent leakage tanks (17) are for the case of accidental leakage of solvent, the Nitrogen generator (18) does not have an air compressor, the Nitrogen storage tank (19) has adequate capacity.

The Oxygen controller and limit meter assembly (20) in 8% continuous, Nitrogen purity controller around 98% in the Process monitor and check continuously the amount of Oxygen present in the process and in the Nitrogen storage tank, thus monitoring the process allowing its evolution insufflating the Nitrogen in the circuit, being that the checks are of 8% alarm: high quantity Oxygen, 7% of the limit for automatic inertization, 5% alarm (in the Nitrogen tank): purity of Nitrogen not sufficient.

There is no knowledge of nylon recycling equipment which gathers jointly, all the constructive and functional characteristics listed above, and which directly or indirectly was as effective as the equipment object of the current patent.

The current invention having been described and illustrated, it is to be understood that it can undergo countless changes and variations in their manner of performance, as long as such changes and variations do no stray from the spirit and scope of the invention, such as defined in the claims table.

## Claims

1. **- "EQUIPMENT FOR RECYCLING NYLON CONTAINED IN FABRICS BY EXTRACTION OF SILICONE", characterized by** the fact that it is comprised of work tanks (1) of cylindrical shape placed in a horizontal manner one over the other, each containing, respectively, solvent for extracting the elastane and solvent for final leaning of the elastane, equipped with removable front cap, two removable maintenance openings, in the front and rear, provided with dual chamber for heating by steam through a coil or indirect steam, thermal insulation, inspection glasses, solvent temperature level controls;

2. **- "EQUIPMENT FOR RECYCLING NYLON CONTAINED IN FABRICS BY EXTRACTION OF SILICONE", characterized by** the fact that the support structure (2) of the material holder basket is equipped with the rear part removable for placing the basket, connection sleeve so as to enable the passage of air without increasing the amount solvent in circulation, standard sleeve system for drying air input, central discharge system of solvent, basket viewing system through a glass, thermal insulation, infeed port with air insufflation system and support frame;

3. **- "EQUIPMENT FOR RECYCLING NYLON CONTAINED IN FABRICS BY EXTRACTION OF SILICONE", characterized by** the fact that the rotating material holder (3) is comprised of perforated material with reinforcement tabs, equipped with a cloak with holes, perforated sectors which will be covered with a hole filter net, attached below the reinforcements, with flexible guards to prevent the exit of pieces of fabric out of the material holder basket for the solvent flow, pinned transmission axle so as to avoid any movement;

4. **- "EQUIPMENT FOR RECYCLING NYLON CONTAINED IN FABRICS BY EXTRACTION OF SILICONE", characterized by** the fact that the support and transmission system (4) is comprised of a system with rollers box with transmission by belts, ball bearings, mechanical seals and Teflon seals and special materials to prevent DMF attack, constant automatic lubrication, notched pulleys and motor with speed controlled by frequency variator (Inverter);

5. **- "EQUIPMENT FOR RECYCLING NYLON CONTAINED IN FABRICS BY EXTRACTION OF SILICONE", characterized by** the fact that the solvent pumps (5) are comprised by circulation pump for transferring solvent equipped with special pneumatic valves for solvents, pre-filters in parallel as well as manual valves for changing the solvent flow; the solvent heating (6) is comprised of a (indirect) steam heat exchange within the circuit with the circulation pump prearranged to maintain the temperature ideal during the entire process, as well as being equipped with temperature control, calculated for an increase of temperature adequate to the whole amount of solvent in the circuit;

6. **- "EQUIPMENT FOR RECYCLING NYLON CONTAINED IN FABRICS BY EXTRACTION OF SILICONE", characterized by** the fact that the air insufflation system (7) is comprised of Schillers with coils heating and cooling the air during the process, equipped with a high air suction to avoid increasing the volume of solvent in the circuit, fans with inverter driven motor, metal air filter, Schiller system with Freon for cooling by means of condensation coils (dual expansion valves), as well as for pre-heating the air heating coils and temperature control systems;

7. **- "EQUIPMENT FOR RECYCLING NYLON CONTAINED IN FABRICS BY EXTRACTION OF SILICONE",** **characterized by** the fact that the Cooling system for drying (8) comprises a Freon refrigerating system for fueling the coils, being equipped with Maneurop compressor, acoustic and thermal insulation, water condenser, Aeroquip in all the coils, accessory components, i.e.: valves, pressure gauges, pressure switches, etc.; the holding tank (9) is circular and it is positioned in horizontal manner by two distillers to receive the solvent to be distilled, it is equipped with a fully removable front, two maintenance openings (front and rear), dual chamber for indirect steam heating, thermal insulation, blade type agitator, inspection with view glass, level and temperature controls;

8. **- "EQUIPMENT FOR RECYCLING NYLON CONTAINED IN FABRICS BY EXTRACTION OF SILICONE", characterized by** the fact that the vacuum group (10) has a system to generate the steam in distillation, being equipped with blade type steam pumps, two Freon condensers for pre-refrigeration of air, impurities filter, Freon condenser for air discharge; the cooling system for vacuum group (11) has Freon refrigeration for fueling the vacuum group condensers, being equipped with Maneurop compressors, acoustic and thermal insulation, water condenser, Aeroquip in all the condensers, fitting components, i.e.: valves, pressure gages, pressure switches, etc.;

9. **- "EQUIPMENT FOR RECYCLING NYLON CONTAINED IN FABRICS BY EXTRACTION OF SILICONE", characterized by** the fact that the distillers (12) are circular and are positioned in horizontal manner side by side to separate the solvent from the silicone removed, equipped with a fully removable front, two maintenance openings (front and rear), dual chamber for indirect steam heating, thermal insulation, inspection with view glass, level and temperature controls; the Distiller condensers (13) have solvent vapors coolers originating from the distillers to have them again in the liquid state, and are equipped with water coil, thermostatic valve for saving water, temperature controls;

10. **- "EQUIPMENT FOR RECYCLING NYLON CONTAINED IN FABRICS BY EXTRACTION OF SILICONE", characterized by** the fact that the condensate recovery tanks (14) have vertical storage containers for solvent condensate originating form the vacuum distillation and destined to the tanks, being equipped with sight glass inspection, level control; the electrical junction box - cleaning / drying module (15) contains all the electric components for performance installed in the assembly plate and with all the cables in the respective channels, being assembled in a vertical manner, with electro-mechanical components for control / protection, the process control being the responsibility of the touch screen electronic programmer with the possibility of different automatic cycles; the electrical junction box - distillation module (16) contains all the electric components for performance installed in the assembly plate and with all the cables in the respective channels, being assembled in a vertical manner, with electro-mechanical components for control / protection, the process control being the responsibility of the PLC; the solvent leakage tanks (17) are for the case of accidental leakage of solvent, the Nitrogen generator (18) does not have an air compressor, the Nitrogen storage tank (19) has adequate capacity; the Oxygen controller and limit meter assembly (20) continuous monitor and check continuously the amount of oxygen in the process and in the Nitrogen storage tank, thus monitoring the process allowing its evolution insufflating the Nitrogen in the circuit, being that the checks are of 8% alarm: high quantity Oxygen, 7% of the limit for automatic inertization, 5% alarm (in the Nitrogen tank): purity of Nitrogen not sufficient.
